# EUROPEAN PATENT SPECIFICATION

(11) **EP 2 541 799 B1**
(45) Date of publication and mention of the grant of the patent: **08.10.2014**
(21) Application number: 12186595.0
(22) Date of filing: 17.06.2004
(51) Int. Cl.: H04B 7/08, H01Q 1/32, H01Q 3/24

(54) **Diversity with identification of specific antenna properties and evaluation thereof**
Diversität mit Identifizierung spezifischer Antenneneigenschaften und deren Bewertung
Diversité avec identification de propriétés d'antennes spécifiques et évaluation de celles-ci

(43) Date of publication of application: 02.01.2013
(62) Divisional of application: 04014262.2
(73) Proprietor: Harman Becker Automotive Systems GmbH, 76307 Karlsbad (DE)
(72) Inventor: Zahm, Michael, 76337 Waldbronn (DE)
(74) Representative: Grünecker, Kinkeldey, Stockmair & Schwanhäusser

(56) References cited:
- EP-A1- 1 126 632
- WO-A-03/058847
- US-A- 4 633 519
- US-A1- 2003 125 078
- US-A1- 2004 038 714
- US-B1- 6 433 749

## Description

The present application concerns a mobile broadcast receiver to be used for the reception of broadcast signals in a vehicle.

As modern vehicles are being equipped with more broadcast reception equipment than just an FM radio, it becomes increasingly important to ensure good reception quality as well as flexibility of use of any equipment mounted in or attached to a car. Additionally to an FM radio, executive vehicles sport terrestrial broadcast TVs, analog as well as digital, and possibly also DAB receivers. As the frequency band and signals for all of these receivers is different, different reception antennas are required.

To attain the reception quality that viewers and listeners are accustomed to from their stationary home or work environment, diversity reception antennas are customarily employed in mobile broadcast reception systems. Diversity reception in this case normally implies spatial diversity. Another option is cross polarization diversity, since the space for antennas and their spacing is usually restricted in a vehicle.

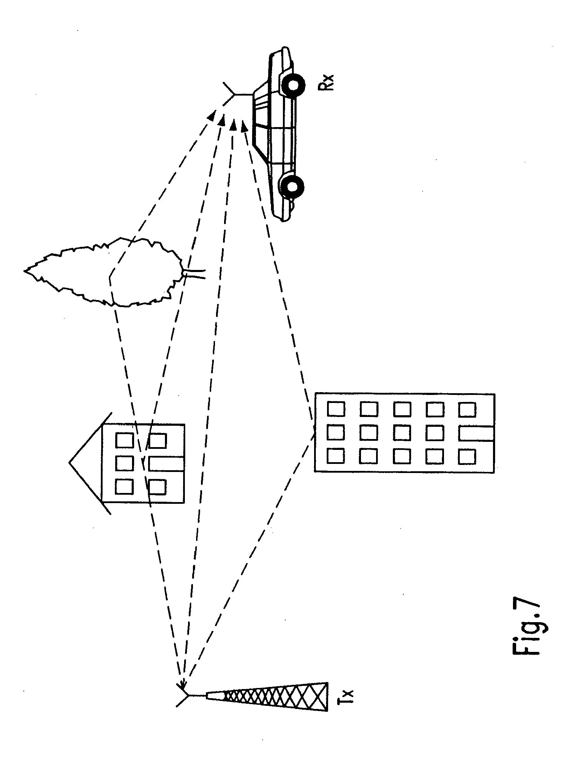

Diversity as employed in mobile reception systems mainly suffer from time varying multi-path fading with extremely different multi-path intensity profiles as illustrated for instance in Fig. 7. Multi-path fading arises in wireless broadcast as a result of reflections from stationary and non-stationary objects and is manifested as a random amplitude and phase modulation. At the receiver the multiple copies of the signal are summed together in either a constructive or destructive manner. The destructive addition of the signals creates fading dips in the signal power. The exact phase relationship and therefore the degree of cancellation will vary from position to position, making it possible for an antenna at location A to experience severe destructive cancellation and an antenna at location B to experience constructive addition. The distances involved depend upon the frequencies used for transmission and can be very small.

Diversity techniques aim to improve reception performance by allowing more than one antenna to be used with a common receiver. These antennas can be spatially separated by an appropriate distance or have different polarizations. Therefore selecting the best antenna on a dynamic basis provides a considerable operational advantage.

A fundamental aim of a diversity receiver is to select the best antenna to automatically and dynamically recover the highest possible signal quality. Multi-path fading is especially an issue in OFDM transmission as utilized in Digital Video Broadcast (DVB). Fig. 7 shows a typical multi-path fading environment where the signal transmitted from the transmitter Tx is received by the receiver Rx directly, as well as after having been reflected off various objects such as a high rise block, a house and/or a tree, as depicted. These different signals received are not correlated. For many scattering environments spatial diversity is an effective way to improve the performance of wireless radio systems. The signals, of which there should be at least two received by the diversity antennas, are then switched between or combined in the receiver.

A standard diversity technique is maximum ratio combining in a receiver, which means that the signal is down-converted into the base band, demodulated and then combined to optimize the signal to noise ratio.

In switched diversity, one or the other of at least two antennas is selected and one of the antennas remains selected until the received signal strength falls below some limit of acceptability. At this point, the other antenna is switched to and this process is repeated.

EP-B-0 517 196 describes a space diversity TV broadcast receiver in a vehicle that can detect whether an antenna is connected or not, and subsequently chooses the best signal of the connected antennas. The video signal only includes the signals from the actually connected antennas, which means that harsh noise is effectively suppressed. The harsh noise would result from the inclusion of a lacking portion of the video or audio signal resulting from the antenna connector signal during a specific period when one of the antennas is not connected. In practice, an antenna connection detection portion is included in between the respective antenna and a tuner, and an unoccupied antenna connector detecting portion outputs a signal to a signal selecting controller which also feeds back into the tuner. In this way it is ascertained that only the signals from connected antennas are compared and can be selected.

Therefore, the solutions so far are restricted to a particular frequency band and to finding out whether an antenna is connected or not.

EP 1 126 632 AS2 discloses a receiver having at least two receiver antenna for receiving high frequency signals, a high frequency switching device for switching the receiving antennas to at least two television channel selection devices, which are adapted to convert the high frequency signals into intermediate frequency (IF) signals, an intermediate switching device for switching the IF signals to at least two demodulation devices and to at least two audio demodulation devices. The audio demodulation device includes a field strength detector and/or quality detector, which provide respective output signals to an evaluation unit. The evaluation unit is adapted to generate a control signal based on the output signals of the field strength detector and/or of the quality detector and to output this control signal to the intermediate frequency switching device; so as to control the switching of the receiver antennas to the at least 2 television channel selection devices.

US 6 433 749 B1 discloses an antenna module for a road vehicle, which comprises: at least two groups of antennas, a TV diversity tuner, and an AM/FM diversity tuner. A first group of antennas includes an AM antenna and four FM antennas, and a second group of antennas includes four TV antennas. The AM/FM diversity tuner receives its signal either from the AM antenna or from one of four FM antennas according to band selection. When tuned to the FM band, the diversity electronics of the FM tuner selects the antenna that offers the signal with least multipath distortion. The TV diversity tuner receives its signals either from one of four TV antennas. The diversity electronics of the TV tuner selects one of four TV antennas that offers the signal with the least multipath distortion.

WO 03/058847 A1 discloses an antenna diversity receiving apparatus for selecting an IF signal out of a plurality of antenna signals, each antenna signal including alternative receiving frequencies. The antenna signals being received by antennas which are connected to the input of respective IF stages. Each IF stage provides a quality signal for each of the alternative receiving frequencies, which represents the degree of the receiving quality. The receiving apparatus selects the antenna frequency combination having the best receiving quality based on the quality signals.

US 4 633 519 discloses a diversity reception system in a mobile radio receiver, which comprises: an electric field type antenna to intercept a radio signal, a magnetic field type antenna to intercept the radio signal, a switching means responsive to a control signal for selectively connecting either the electric field type antenna or the magnetic field type antenna to the receiver, a control unit for generating the control signal based on a squelched signal and two different reference levels, and a squelch circuit 40 for generating the squelch signal based on the noise level of an audio signal.

EP 1 126 632 A1 discloses a diversity apparatus for a mobile communication terminal with a GPS function. The diversity apparatus comprises: two multi-band antennas, two power detectors for detecting the signal strength of the signals received by the associated multiband antennas, a comparator for comparing the signal strengths detected by the power detectors and generating a control signal for selecting the strongest signal among the received signals according to the comparison results, a switch for selecting one of the received signals in response to the control signal generated by the comparator, and an RF receiver for processing the selected signal.

It is an object of the present invention to make the selection of one of the diversity antennas as efficient as possible and be able to adapt the solution found to a variety of practical situations that can arise regarding diversity reception in a vehicle.

This object is solved by the subject-matter of independent claims 1 and 2. Further advantageous embodiments of the invention are defined in the dependent claims.

An advantage of the solution of the present invention is that the best reception signal is automatically selected by the mobile broadcast receiver without any human intervention or prolonged waiting time.

A further advantage of the mobile broadcast receiver of the current invention is that it can be employed with different kinds of receive diversity. These can include spatial diversity, cross-polar diversity and/or frequency diversity. This means that the use of the mobile broadcast receiver is not restricted by the antenna and/or antenna diversity design.

The mobile broadcast receiver can also determine the diversity antenna circuit identifications, which has the advantage that the mobile broadcast receiver can immediately adapt to the correct antenna, frequency and modulation.

In a preferred embodiment the mobile broadcast receiver comprises a plurality of detectors each determining the operational characteristics of the antenna connected to it, which has the advantage that the detectors can be kept simple.

This lack of complexity simplifies the design of the mobile broadcast receiver as well as making it fairly robust.

Having only one detector in the mobile broadcast receiver that is connected to the plurality of external diversity antennas through a multiplexer has the advantage that only one detector is necessary and therefore the number of components is kept low. This means that there are less components that can develop a fault, therefore making the mobile broadcast receiver more reliable.

It is advantageous for the mobile broadcast receiver to comprise an antenna impedance detection unit, an antenna directionality determination unit and a unit for determining an antenna frequency bandwidth, as these operational characteristics are necessary to establish which antenna should be selected for the reception of the broadcast signal.

Using resistors, current sources or voltage sources as coding means for antennas has the advantage of being a simple solution to the inherently quite complex problem of how to let the mobile broadcast receiver know which antennas are actually connected.

In a preferred implementation the tuning means is adapted for the reception of analog broadcast signals, like FM, VHF and UHF, as these are the most common distribution signals for broadcast transmissions.

According to another preferred embodiment the tuning means within the mobile broadcast receiver can receive a digital signal, like DAB, DVB-H and DVB-T, as the broadcast transmitters are being switching over to these digital standards in the near to medium term future.

It is advantageous to the mobile broadcast receiver to comprise a plurality of tuners, each assigned to a specific frequency band as this increases the flexibility of the mobile broadcast receiver.

The mobile broadcast receiver has the advantage that its tuning means can be a Software Defined Radio. This has the advantage of making the mobile broadcast receiver more flexible regarding the reception of signals from different frequency bands and standards.

Preferred embodiments of the present invention will now be described by way of example only with reference to the attached Figures, wherein:
Fig. 1 is a block diagram showing a mobile broadcast receiver in accordance with an embodiment;
Fig. 2 is a block diagram of a mobile broadcast receiver in accordance with another embodiment;
Fig. 3 shows a block diagram of a mobile broadcast receiver in accordance with another embodiment;
Fig. 4 shows a block diagram of a mobile broadcast system in accordance with another embodiment of the present invention;
Fig. 5 shows a block diagram of a mobile broadcast system in accordance with another embodiment;
Fig. 6 shows a flow-chart of the process of selecting an external diversity antenna;
Fig. 7 is an illustration of multi-path fading; and
Fig. 8 is a block diagram of a mobile broadcast receiver accordance with another embodiment of the present invention.

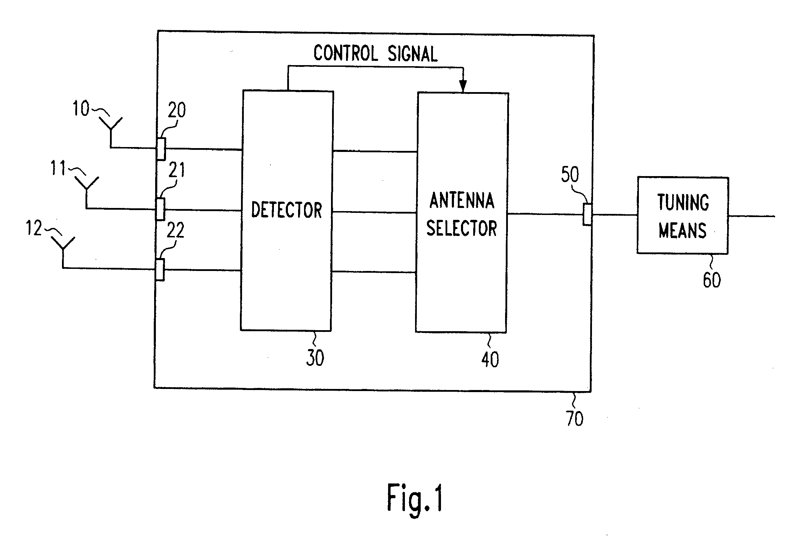

The block diagram of Fig. 1 shows a schematic view of a mobile broadcast receiver. The broadcast signal is received by at least one of the external diversity antennas 10, 11, 12 which are connected to the mobile broadcast receiver through the antenna connectors 20, 21, 22. The detector 30 detects the operational characteristics of the antennas 10, 11, 12 and outputs a control signal to the antenna selector 40. The received broadcast signal is also transmitted from the detector 30 to the antenna selector 40. The antenna selector 40 selects the signal from at least one of the antennas 10, 11, 12 and outputs the selected signal through signal output 50 to tuning means 60, where the received broadcast signal is turned into the visual TV signal and/or audible radio signal.

Fig. 1 is an example configuration in as far as less than the three antennas 10, 11,12 shown can be connected to the mobile broadcast receiver 70 and of course more than the three antennas 10, 11, 12 shown can be connected to the mobile broadcast receiver 70 as well. The number of antenna connectors 20, 21, 22 of the mobile broadcast receiver 70 is adjusted accordingly.

The antennas 10, 11, 12 can be frequency selective antennas for a specific frequency and like e.g. FM, VHF, UHF, DAB or DVB or they could be broadband antennas for any combination of those frequency bands or even covering the whole frequency range for broadcast reception. It is also possible that for example antennas 10 and 11 cover the same frequency band and provide spatial diversity for the mobile broadcast receiver 70. For this purpose, they should ideally be spaced at multiples of the wavelength.

The antennas 10, 11, 12 could conceivably also be cross polarized antennas meaning that the resulting diversity is polarization diversity. Frequency diversity can also be employed.

There is a multitude of different reception antennas available for the vehicle market these days. This includes four-way diversity car antennas in a whip style for roof installation, as well as windscreen mounted cable antennas with two-way diversity for the FM, VHF and UHF bands. Roof antennas may also include analog periodic antennas over a metallic reflector. An issue for windscreen antennas is that they should be as unobtrusive as possible and it is therefore aimed to make them from transparent conductors. It can be expected, however, that a significant performance loss will occur in this case due to the appreciable conductor resistivity.

The most popular antenna diversity technique is spatial diversity, in which the antennas differ by their spatial location. Having the antennas at different locations means that when one of the antennas receives a dip in the signal, the other might well receive a maximum. Therefore having the choice of these two signals means that the reception quality is improved over that of just one antenna reception.

Cross-polar diversity antennas make use of the fact that in a multi-path environment the broadcast signal is reflected of many different obstacles, some of which will change the polarity of the signal. The different reflectors are probably made of different materials, for example concrete in high-rise blocks, organic matter on trees and the metal of cars and lorries, and therefore their reflective properties differ. These different reflective properties can induce a change of polarization in the reflected signal. On reception with a single polarized antenna this would mean that a signal with a lesser amplitude would be received, and therefore the effect of noise or interference would be much greater. With a cross-polarized antenna the signals of the two polarizations can be utilized and therefore the best signal selected or the two signals can be combined.

In today's very crowded wireless world, frequency diversity can also be employed, making use of the fact that sometimes the same program is broadcast in two different frequency bands. Since any two different frequencies experience different multipath fading, it is very useful to be able to receive these two different frequencies. When one frequency might experience destructive interference the reception at the other frequency might be fine. Again, the best signal is chosen by the antenna selector 40 for further processing in the tuning means 60.

The detector 30 analyses the signals received through the antenna 10, 11, 12 through the connectors 20, 21, 22 to establish the relevant antenna characteristics. These can include the antenna impedance, the antenna directionality, the antenna frequency bandwidth of operation and others, as well as information on the antenna matching circuitry.

The detector 30 uses the information thus gained to transmit a control signal to the antenna selector 40 with information on the relevant antenna characteristics. The antenna selector 40 uses this control signal received from the detector 30 as well as other quality indications to choose the signal from the best antenna 10, 11 or 12, in for example, switched diversity. It is, however, also conceivable that maximum ratio combining is used here.

Only one signal is then output through the connector 50 to the tuning means 60 for further processing. These tuning means could include tuners for any of the following signals: FM, VHF, UHF, DAB and DVB. Which of these tuning means is employed depends on the signal received and therefore which antenna was selected by the antenna selector 40.

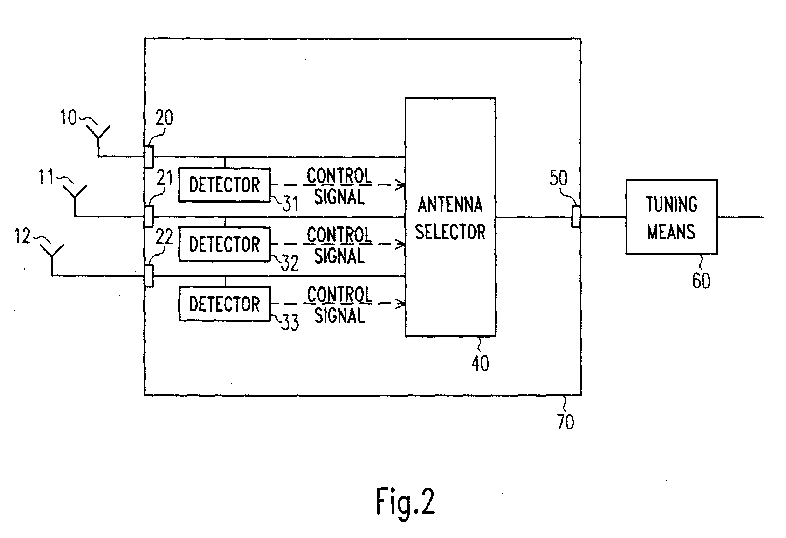

Fig. 2 shows a particular embodiment of the mobile broadcast receiver 70, in which the same elements as in Fig. 1 are denoted with the same reference signs. Here a signal is received by the external diversity antennas 10, 11, 12, and input to the mobile broadcast receiver 70 through the connector 20, 21, 22, respectively. Each of these input signals then has its own detector 31, 32, 33, which detects the operational antenna characteristics as described for Fig. 1 above. Each detector 31, 32, 33 sends a control signal to the antenna selector 40 which selects the antenna 10, 11, 12 as described in Fig. 1 above. The best signal is then output through connector 50 to the tuning means 60 for further processing.

In this embodiment each detector 31, 32, 33 is only responsible for the signal coming from one of the antennas 10, 11, 12, respectively. This means that under certain circumstances the detector 31, 32, 33 could be simplified for dealing with specific antenna characteristics only. Each detector 31, 32, 33, will measure the matching circuitry characteristics and the possible coding at the beginning of every cycle, which means when the mobile broadcast receiver 70 is turned on or when the frequency band in the tuning means 60 is switched. The operational characteristics of the antenna 10, 11, 12 is constantly monitored by the detector 31, 32, 33, and a control signal sent to the antenna selector 40.

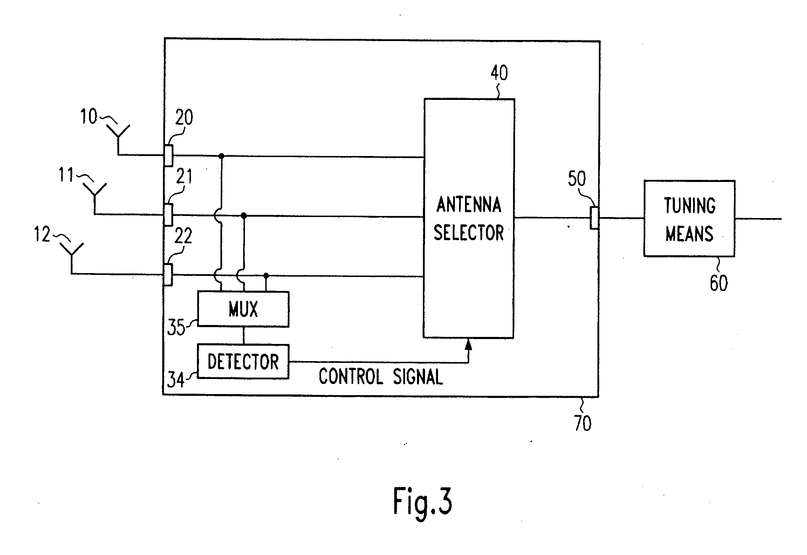

Fig. 3 shows an embodiment where there is one detector 34 for determining the antenna 10, 11, 12 characteristics and matching circuit characteristics of all antennas 10, 11, 12. To achieve this, the signal is received by the antennas 10, 11, 12 and input into the mobile broadcast receiver 70 through the connectors 20, 21, 22, where the signals are multiplexed in the multiplexer 35 before the characteristics are determined in the detector 34, which in turn sends a control signal to the antenna selector 40. The chosen signal is then output through the connector 50 to the tuning means 60.

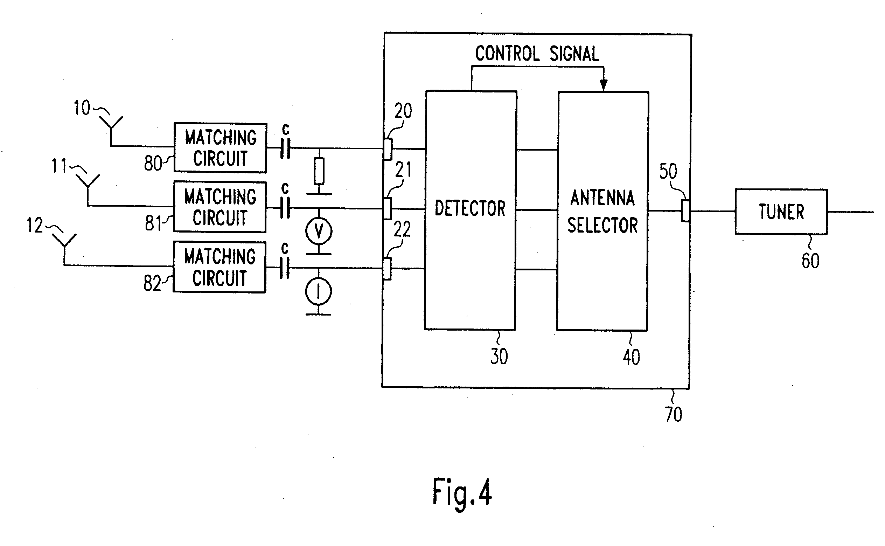

Therefore the detector 34 has to be able to cope with the range of frequencies received by the antennas 10, 11, 12 and be able to determine all possible antenna and matching circuitry characteristics. This means that the detector 34 receives FM, VHF, UHF, DAB and DVB signals. Within these frequency bands there is a possibility for several different antennas and combinations of antennas for diversity possible. Therefore, there is also a plurality of possibilities regarding the matching circuitry which are explained in more detail with reference to Fig. 4.

The multiplexer 35 ensures that the detector 34 deals with one signal at a time. This has the advantage that only one detector 34 is required, but the complexity of this detector 34 is possibly higher than that of detectors 31, 32, 33 in Fig. 2. For the antenna selector 40, this also means that it only receives one control signal from detector 34, which reduces its complexity.

The mobile broadcast receiver 70 depicted in Fig. 4 is the same as that of Fig. 1 and therefore its detailed description is omitted here for reasons of brevity. The same references are used for the same elements. Fig. 4 shows more detail on the possible configurations for antenna matching circuits 80, 81, 82 and the coding that can be introduced.

The block diagram in Fig. 4 shows how a capacitor C is used to decouple the antenna 10, 11, 12 and matching circuit 80, 81, 82 from the coding employed for each antenna from the mobile broadcast receiver 70.

The reasons for wanting to include a code with an antenna 10, 11, 12 are manifold and include possible faster and simpler operation of the mobile broadcast receiver 70. If the detector 30 can detect a coded input it can forward this information to the antenna selector 40, which then has more information on which to base its selection.

The coding can be carried out for example by inserting a resistor R between the antenna 10 and the input connector 21, inserting a voltage source V between the antenna 11 and the input connector 22 and/or connecting a current source I between the antenna 12 and the input connector 23. The values of the resistor R, the voltage source V and the current source I are coded to have a specific meaning to the antenna selector 40.

Different values of the resistor R for example could be as follows and have the following meanings: R = 10 k Ω and could indicate a passive FM dipole which could be used for antenna diversity for the TV receiver especially in band I to III channels; R = 20 k Ω could for example be an active adhesive laminate antenna which is used for TV reception and means that a preamplifier should be switched off in the RF path; R = 30 k Ω could indicate a passive laminated antenna for TV reception where the preamplifier in the RF path is needed.

The value of the resistor R can also be used to indicate whether the receiver is actually mobile or used in a stationary home environment. If, for example, the resistor R has a value of less than 50 k Ω this could mean that the receiver is used in its mobile mode. If, on the other hand, the value of the resistor R is greater than 50 k Ω this could be used as an indication that the receiver is actually connected to a stationary antenna or even a cable. This might have the implication, for example, that in the home environment diversity is not required as the signal received does not suffer multipath fading.

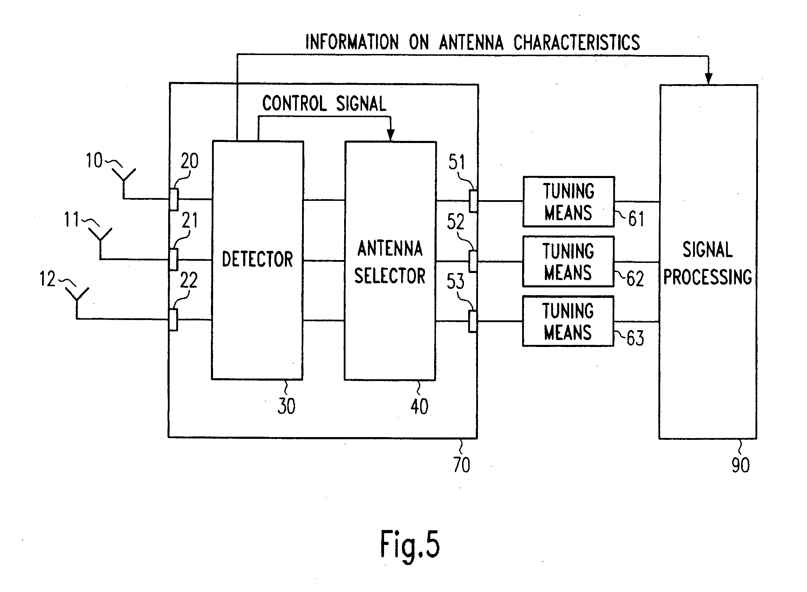

Fig. 5 shows a configuration in which the mobile broadcast receiver 70 can also be used. This is a configuration as would be used for Software Defined Radio (SDR) where the mobile broadcast receiver as described in more detail in Fig. 1 outputs signals through the connectors 51, 52, 53 to tuning means 61, 62 and 63. Then the signal is processed in the signal processing section 90. The tuning means in this case consist of a multi-tuner front end an A/D converter and a software demodulator.

Software Defined Radio means that radio functionality is moved into software and the analog/digital interface is moved closer to the air radio interface at the antenna. One of its advantages is that general purpose hardware can be substituted for dedicated hardware, therefore reducing the production costs.

The term SDR is used to describe radios that provide software controllers for a variety of modulation techniques, wideband or narrowband operation, and waveform requirements and involving standards over a broad frequency range. The frequency bands covered may still be constrained at the front end requiring a switch in the antenna system. SDR enabled user devices can be dynamically programmed in software to reconfigure their characteristics for better performance. SDR offers a solution to accommodate many standards, frequency bands, and applications by offering end user devices that can be programmed, fixed or enhanced by over-the-air software. With SDR a common hardware platform is implemented and different standards and technologies are accommodated by software modules.

Front end processing in SDR consists of the physical air interface, the front end radio frequency processing, and any frequency up and down conversion that is necessary, as well as modulation/demodulation processing. The signal processing section 90 is responsible for the content, information processing for the purpose of decomposition, or recovering the embedded information containing data control and timing.

The mobile broadcast receiver 70 allows a more automatic deployment of the receiving antennas 10, 11, 12. In this case, the information on the antenna characteristics is also sent from the detector 30 to the signal processing section 90 and the control signal is being sent from the detector 30 to the antenna selector 40.

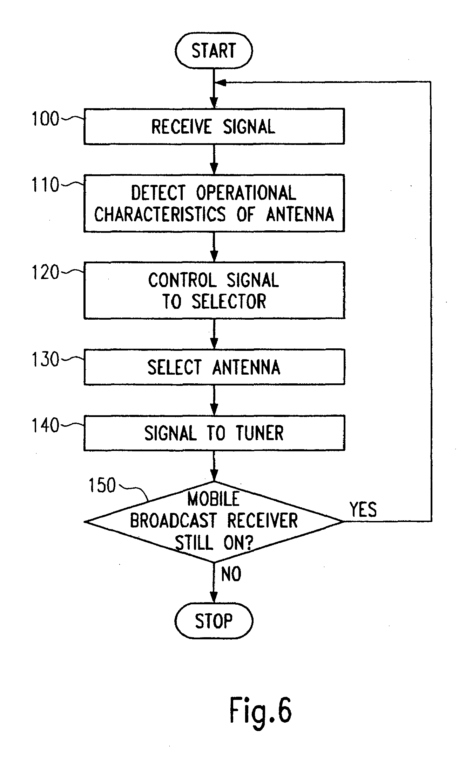

Fig. 6 shows the different steps required in the mobile broadcast receiver in the form of a flow-chart. A broadcast signal is received in step 100 and the operational characteristics of the antenna detected in step 110. A control signal is sent to the selector in step 120, which on the basis of the control signal selects one or more antennas in step 130. The signal is then forwarded to the tuner in step 140. It is then checked whether the mobile broadcast receiver is still switched on in step 150. If it is not, the process is stopped, but if it is still on the whole process is repeated from the reception of the signal in step 100.

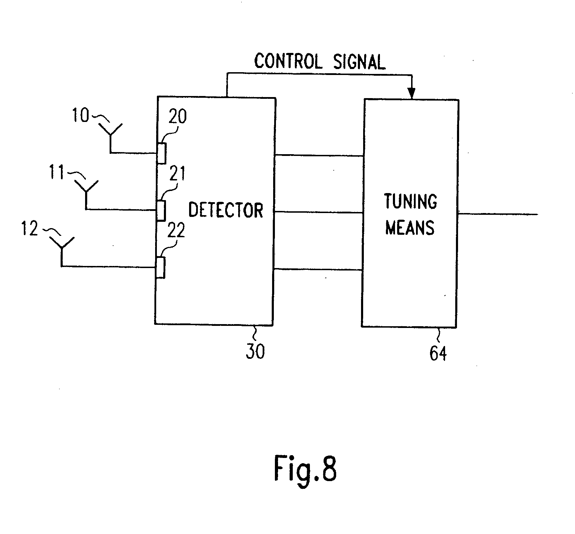

In another embodiment the mobile broadcast receiver is further simplified by incorporating the antenna selector functionality in the tuning means 64. Fig. 8 shows a situation where there is no explicit antenna selector involved. The signal is received by the external diversity antennas 10, 11, 12 and fed into the detector 30 via the input 20, 21, 22. As before the detector 30 determines the antenna characteristics and outputs a control signal. The tuning means 64 receives this control signal and selects the required antenna signal for further signal processing. That means that the antenna selection process occurs within the tuning means 64.

## Claims

1. A mobile broadcast receiver for use in receive diversity, comprising:
a plurality of external diversity antennas (10, 11, 12) for receiving a plurality of antenna signals,
a plurality of antenna connectors (20, 21, 22) for connecting the plurality of external diversity antennas (10, 11, 12),
a detector (30) for determining external diversity antenna operational characteristics and for outputting a control signal based on the defined operational characteristics, and
tuning means adapted to receive the control signal and to select a required antenna signal from the plurality of antenna signals based on the control signal,
**characterized by**
matching circuitry (80) for each external diversity antenna (10) of the plurality of external diversity antennas (10, 11, 12),
coding means for each external diversity antenna of the plurality of external diversity antennas (10, 11, 12), and
capacitors for decoupling the plurality of external diversity antennas (10, 11, 12) and matching circuitries (80, 81, 82) from the coding means employed for the plurality of external diversity antennas (10, 11, 12).

2. A mobile broadcast receiver for use in receive diversity, comprising:
a plurality of external diversity antennas (10, 11, 12) for receiving a plurality of antenna signals,
a plurality of antenna connectors (20, 21, 22) for connecting the plurality of external diversity antennas (10, 11, 12),
an antenna selector (40) for selecting at least one of the external diversity antennas (10, 11, 12),
a signal output (50) for outputting a signal of the selected antenna to a tuning means (60),
a detector (30) for determining external diversity antenna operational characteristics and for outputting a control signal based on the defined operational characteristics,
means for applying the control signal to the antenna selector (40) for the selection of at least one of the external diversity antenna (10, 11, 12),
**characterized by**
antenna matching circuitry (80) for each external diversity antenna (10) of the plurality of external diversity antennas (10, 11, 12),
coding means for each external diversity antenna of the plurality of external diversity antennas (10, 11, 12), and
capacitors for decoupling the plurality of external diversity antennas (10, 11, 12) and antenna matching circuitries (80, 81, 82) from the coding means employed for the plurality of external diversity antennas (10 ,11, 12).

3. The mobile broadcast receiver of claim 1 or 2, wherein the coding means includes a resistor, of a predetermined resistance value, inserted between the at least one antenna (10) and the antenna connector (20) for connecting the at least one antenna (10).

4. The mobile broadcast receiver of any of claims 1 to 3, wherein the coding means includes a voltage source inserted between the at least one antenna (11) and the antenna connector (21) for connecting the at least one antenna (11).

5. The mobile broadcast receiver of any of claims 1 to 4, wherein the coding means includes a current source inserted between the at least one antenna (12) and the antenna connector (22) for connecting the at least one antenna (12).

6. The mobile broadcast receiver of claim 3, wherein the predetermined resistance value indicates either a passive FM dipole used for TV reception, an active adhesive laminate antenna used for TV reception where a preamplifier is switched off in an RF path, or a passive laminated antenna for TV reception where a preamplifier in an RF path is needed.

7. The mobile broadcast receiver of claim-3, wherein the predetermined resistance value indicates whether the mobile broadcast receiver is actually mobile or used in a stationary home environment.

8. The mobile broadcast receiver of claim 1 or 2, further comprising an antenna impedance detection unit.

9. The mobile broadcast receiver of claim 1 or 2, further comprising an antenna directionality determination unit.

10. The mobile broadcast receiver of claim 1 or 2, further comprising a detection unit for determining an antenna frequency bandwidth.

11. The mobile broadcast receiver of claim 3, further comprising a voltage detector for detecting a voltage representing a value of a resistor in the diversity antenna circuit.

12. The mobile broadcast receiver of claim 5, further comprising a current sensor for determining a current level at the antenna connector.

13. The mobile broadcast receiver of claim 4, further comprising a voltage detector for determining a voltage level at the antenna connector.

14. The mobile broadcast receiver of any of claims 1 to 13, wherein the tuning means (60) is adapted to receive an analogue signal or a digital signal.

15. The mobile broadcast receiver according to claim 14, wherein the tuning means (60) is adapted to receive an FM radio signal, or a VHF signal, or an UHF signal, or a DAB signal, or a DVB-H signal, or a DVB-T signal.

## Patentansprüche

1. Mobiler Übertragungsempfänger zur Verwendung beim Diversity-Empfang, umfassend:
eine Mehrzahl externer Diversity-Antennen (10, 11, 12) zum Empfangen einer Mehrzahl von Antennensignalen,
eine Mehrzahl von Antennenanschlüssen (20, 21, 22) zum Verbinden der Mehrzahl externer Diversity-Antennen (10, 11, 12),
einen Detektor (30) zum Bestimmen von Betriebskennzahlen der externen Diversity-Antennen und zum Ausgeben eines Steuersignals auf Grundlage der definierten Betriebskennzahlen, und
ein Abstimmmittel zum Empfangen des Steuersignals und zum Auswählen eines erforderlichen Antennensignals von der Mehrzahl von Antennensignalen auf Grundlage des Steuersignals,
**gekennzeichnet durch**
Anpassungsschaltungen (80) für jede externe Diversity-Antenne (10) der Mehrzahl externer Diversity-Antennen (10, 11, 12),
ein Kodierungsmittel für jede externe Diversity-Antenne der Mehrzahl externer Diversity-Antennen (10, 11, 12) und
Kondensatoren zum Entkoppeln der Mehrzahl externer Diversity-Antennen (10, 11, 12) und Anpassungsschaltungen (80, 81, 82) von dem Kodierungsmittel, das für die Mehrzahl externer Diversity-Antennen (10, 11, 12) benutzt wird.

2. Mobiler Übertragungsempfänger zur Verwendung im Diversity-Empfang, umfassend:
eine Mehrzahl externer Diversity-Antennen (10, 11, 12) zum Empfangen einer Mehrzahl von Antennensignalen,
eine Mehrzahl von Antennenanschlüssen (20, 21, 22) zum Verbinden der Mehrzahl externer Diversity-Antennen (10, 11, 12),
einen Antennenwähler (40) zum Auswählen wenigstens einer der Mehrzahl externer Diversity-Antennen (10, 11, 12),
einen Signalausgang (50) zum Ausgeben eines Signals der ausgewählten Antenne an ein Abstimmmittel (60),
einen Detektor (30) zum Bestimmen von Betriebskennzahlen der externen Diversity-Antennen und zum Ausgeben eines Steuersignals auf Grundlage der definierten Betriebskennzahlen, und
ein Mittel zum Anwenden des Steuersignals auf den Antennenwähler (40) zur Auswahl wenigstens einer der Mehrzahl externer Diversity-Antennen (10, 11, 12),
**gekennzeichnet durch**
Anpassungsschaltungen (80) für jede externe Diversity-Antenne (10) der Mehrzahl externer Diversity-Antennen (10, 11, 12),
ein Kodierungsmittel für jede externe Diversity-Antenne der Mehrzahl externer Diversity-Antennen (10, 11, 12) und
Kondensatoren zum Entkoppeln der Mehrzahl externer Diversity-Antennen (10, 11, 12) und Antennenanpassungsschaltungen (80, 81, 82) von dem Kodierungsmittel, das für die Mehrzahl externer Diversity-Antennen (10, 11, 12) benutzt wird.

3. Mobiler Übertragungsempfänger nach Anspruch 1 oder 2, wobei das Kodierungsmittel einen Widerstand mit einem im Voraus festgelegten Widerstandswert aufweist, der zwischen der wenigstens einen Antenne (10) und dem Antennenanschluss (20) zum Verbinden der wenigstens einen Antenne (10) eingefügt ist.

4. Mobiler Übertragungsempfänger nach einem der Ansprüche 1 bis 3, wobei das Kodierungsmittel eine Spannungsquelle aufweist, die zwischen der wenigstens einen Antenne (11) und dem Antennenanschluss (21) zum Verbinden der wenigstens einen Antenne (11) eingefügt ist.

5. Mobiler Übertragungsempfänger nach einem der Ansprüche 1 bis 4, wobei das Kodierungsmittel eine Stromquelle aufweist, die zwischen der wenigstens einen Antenne (12) und dem Antennenanschluss (22) zum Verbinden der wenigstens einen Antenne (12) eingefügt ist.

6. Mobiler Übertragungsempfänger nach Anspruch 3, wobei der im Voraus festgelegte Widerstandswert entweder einen passiven FM-Dipol für den Fernsehempfang, eine aktive Haftstreifenantenne für den Fernsehempfang, wobei ein Vorverstärker in einem RF-Weg ausgeschaltet ist, oder eine passive Streifenantenne für den Fernsehempfang angibt, wobei ein Vorverstärker in einem RF-Weg benötigt wird.

7. Mobiler Übertragungsempfänger nach Anspruch 3, wobei der im Voraus festgelegte Widerstandswert angibt, ob der mobile Übertragungsempfänger tatsächlich mobil oder in einer stationären Wohnungsumgebung benutzt wird.

8. Mobiler Übertragungsempfänger nach Anspruch 1 oder 2, ferner umfassend eine Antennenimpedanzerkennungseinheit.

9. Mobiler Übertragungsempfänger nach Anspruch 1 oder 2, ferner umfassend eine Antennendirektionalitätsbestimmungseinheit.

10. Mobiler Übertragungsempfänger nach Anspruch 1 oder 2, ferner umfassend eine Erkennungseinheit zum Bestimmen einer Antennenfrequenzbandbreite.

11. Mobiler Übertragungsempfänger nach Anspruch 3, ferner umfassend einen Spannungsdetektor zum Erkennen einer Spannung, die einen Wert eines Widerstands in der Diversity-Antennenschaltung darstellt.

12. Mobiler Übertragungsempfänger nach Anspruch 5, ferner umfassend einen Stromsensor zum Bestimmen eines Strompegels am Antennenanschluss.

13. Mobiler Übertragungsempfänger nach Anspruch 4, ferner umfassend einen Spannungssensor zum Bestimmen eines Spannungspegels am Antennenanschluss.

14. Mobiler Übertragungsempfänger nach einem der Ansprüche 1 bis 13, wobei das Abstimmmittel (60) dazu angepasst ist, ein Analogsignal oder ein Digitalsignal zu empfangen.

15. Mobiler Übertragungsempfänger nach Anspruch 14, wobei das Abstimmmittel (60) dazu angepasst ist, ein FM-Funksignal oder ein VHF-Signal oder ein UHF-Signal oder ein DAB-Signal oder ein DVB-H-Signal oder ein DVB-T-Signal zu empfangen.

## Revendications

1. Récepteur de radiodiffusion mobile utile pour recevoir une diversité, comprenant:
une pluralité d'antennes externes de diversité (10, 11, 12) permettant de recevoir une pluralité de signaux d'antenne,
une pluralité de connecteurs d'antenne (20, 21, 22) permettant de connecter la pluralité d'antennes externes de diversité (10, 11, 12),
un détecteur (30) permettant de déterminer des caractéristiques opérationnelles d'antenne de diversité externe et pour émettre un signal de commande en fonction des caractéristiques opérationnelles définies, et
des moyens de syntonisation conçus pour recevoir le signal de commande et pour sélectionner un signal d'antenne requis à partir de la pluralité de signaux d'antenne en fonction du signal de commande,
**caractérisé par**
des circuits de concordance (80) destinés à chaque antenne externe de diversité (10) de la pluralité d'antennes externes de diversité (10, 11, 12),
des moyens de codage pour chaque antenne externe de diversité de la pluralité d'antennes externes de diversité (10, 11, 12) et
des condensateurs permettant de découpler la pluralité d'antennes externes de diversité (10, 11, 12) et les circuits de concordance (80, 81, 82) à partir des moyens de codage employés pour la pluralité d'antennes externes de diversité (10, 11, 12).

2. Récepteur de radiodiffusion mobile utile pour recevoir une diversité, comprenant:
une pluralité d'antennes externes de diversité (10, 11, 12) permettant de recevoir une pluralité de signaux d'antenne,
une pluralité de connecteurs d'antenne (20, 21, 22) permettant de connecter la pluralité d'antennes externes de diversité (10, 11, 12),
un sélecteur d'antenne (40) permettant de sélectionner au moins une des antennes externes de diversité (10, 11, 12),
une sortie de signaux (50) permettant d'émettre un signal de l'antenne sélectionnée vers un moyen de syntonisation (60),
un détecteur (30) permettant de déterminer des caractéristiques opérationnelles d'antenne de diversité externe et pour émettre un signal de commande en fonction des caractéristiques opérationnelles définies,
des moyens d'application du signal de commande au sélecteur d'antenne (40) pour la sélection d'au moins une des antennes externes de diversité (10, 11, 12),
**caractérisé par**
des circuits de concordance (80) destinés à chaque antenne externe de diversité (10) de la pluralité d'antennes externes de diversité (10, 11, 12),
des moyens de codage pour chaque antenne externe de diversité de la pluralité d'antennes externes de diversité (10, 11, 12) et
des condensateurs permettant de découpler la pluralité d'antennes externes de diversité (10, 11, 12) et les circuits de concordance (80, 81, 82) à partir des moyens de codage employés pour la pluralité d'antennes externes de diversité (10, 11, 12).

3. Récepteur de radiodiffusion mobile selon la revendication 1 ou 2, où le moyen de codage comprend une résistance, d'une valeur prédéterminée de résistance, insérée entre l'au moins une antenne (10) et le connecteur d'antenne (20), afin de connecter l'au moins une antenne (10).

4. Récepteur de radiodiffusion mobile selon l'une quelconque des revendications 1 à 3, dans lequel le moyen de codage contient une source de tension insérée entre l'au moins une antenne (11) et le connecteur d'antenne (21) afin de raccorder l'au moins une antenne (11).

5. Récepteur de radiodiffusion mobile selon l'une quelconque des revendications 1 à 4, dans lequel le moyen de codage contient une source de courant insérée entre l'au moins une antenne (12) et le connecteur d'antenne (22) afin de connecter l'au moins une antenne (12).

6. Récepteur de radiodiffusion mobile selon la revendication 3, où la valeur prédéterminée de résistance indique soit un dipôle FM passif utilisé pour la réception TV, soit une antenne laminée adhésive active utilisée pour la réception TV où un préamplificateur est mis à l'arrêt dans une voie RF, soit une antenne laminée passive pour réception TV où un préamplificateur dans une voie RF est nécessaire.

7. Récepteur de radiodiffusion mobile selon la revendication 3, où la valeur prédéterminée de résistance indique si le récepteur de radiodiffusion mobile est soit réellement mobile soit utilisé dans un environnement de domicile fixe.

8. Récepteur de radiodiffusion mobile selon la revendication 1 ou 2, comprenant en outre une unité de détection d'impédance d'antenne.

9. Récepteur de radiodiffusion mobile selon la revendication 1 ou 2, comprenant en outre une unité de détermination de directionnalité d'antenne.

10. Récepteur de radiodiffusion mobile selon la revendication 1 ou 2, comprenant en outre une unité de détection pour la détermination d'une largeur de bande de fréquence d'antenne.

11. Récepteur de radiodiffusion mobile selon la revendication 3, comprenant en outre un détecteur de tension permettant de détecter une tension représentant une valeur d'une résistance dans le circuit d'antenne de diversité.

12. Récepteur de radiodiffusion mobile selon la revendication 5, comprenant en outre un détecteur de courant permettant de déterminer un niveau de courant au niveau du connecteur d'antenne.

13. Récepteur de radiodiffusion mobile selon la revendication 4, comprenant en outre un détecteur de tension permettant de déterminer un niveau de tension au niveau du connecteur d'antenne.

14. Récepteur de radiodiffusion mobile selon l'une quelconque des revendications 1 à 13, dans lequel le moyen de syntonisation (60) est conçu pour recevoir un signal analogique ou un signal numérique.

15. Récepteur de radiodiffusion mobile selon la revendication 14, dans lequel le moyen de syntonisation (60) est conçu pour recevoir un signal de radio FM ou un signal VHF ou un signal UHF ou un signal DAB ou un signal DVB-H ou un signal DVB-T.
